# EUROPÄISCHE PATENTSCHRIFT

(11) **EP 2 751 858 B1**
(45) Veröffentlichungstag und Bekanntmachung des Hinweises auf die Patenterteilung: **04.12.2019**
(21) Anmeldenummer: 12756441.7
(22) Anmeldetag: 04.09.2012
(51) Int. Cl.: H01M 4/38, H01M 10/39, H01M 4/52, H01M 4/80, H01M 4/66, H01M 4/02

(54) **SPEICHERELEMENT FÜR EINE FESTELEKTROLYTBATTERIE**
STORAGE ELEMENT FOR A SOLID ELECTROLYTE BATTERY
ÉLÉMENT ACCUMULATEUR POUR UNE BATTERIE À ÉLECTROLYTE SOLIDE

(30) Priorität: 27.09.2011 DE 102011083540; 07.10.2011 DE 102011084181
(43) Veröffentlichungstag der Anmeldung: 09.07.2014
(73) Patentinhaber: Siemens Aktiengesellschaft, 80333 München (DE)
(72) Erfinder: SOLLER, Thomas, 94405 Landau/Isar (DE); BENKERT, Katrin, 90571 Schwaig (DE); SCHUH, Carsten, 85598 Baldham (DE)
(86) Internationale Anmeldenummer: PCT/EP2012/067157
(87) Internationale Veröffentlichungsnummer: WO 2013/045225

(56) Entgegenhaltungen:
- EP-A1- 1 513 214
- EP-A1- 2 335 807
- WO-A2-98/19351
- DE-T2- 68 918 580
- US-A- 2 627 531

## Beschreibung

Die Erfindung betrifft ein Speicherelement für eine Festelektrolytbatterie nach dem Oberbegriff von Patentanspruch 1.

Festelektrolytbatterien sind nach Art einer Brennstoffzelle mit einem Festkörperelektrolyten aufgebaut. Der Elektrolyt ist zwischen zwei Elektroden angeordnet, wovon eine eine Luftelektrode ist, die aus einem Material besteht, welches den Luftsauerstoff aufspaltet und die dabei entstehenden Sauerstoffionen zum Elektrolyten leitet. Der Elektrolyt ist ebenfalls aus einem Material hergestellt, das Sauerstoffionen leiten kann. An seiner der Luftelektrode gegenüber liegenden Seite ist die zweite Elektrode angeordnet, die aus einem zu oxidierendem und zu reduzierendem Metall bzw. Metalloxid besteht. Die Batterie wird entladen, indem das Metall mittels Sauerstoffionen aus dem Luftsauerstoff oxidiert wird, und aufgeladen, indem bei Anlegen einer Spannung das Metalloxid unter Abgabe von Sauerstoffionen reduziert wird, wobei die Sauerstoffionen dann durch den Elektrolyten zur Luftelektrode wandern, von wo aus sie als molekularer Sauerstoff an die Umgebung abgegeben werden. Neuere Entwicklungen auf dem Gebiet der Festelektrolyt-Batterien haben dazu geführt, die zweite Elektrode nicht mehr selbst als Speichermedium zu nutzen, sondern ein zusätzliches Speichermedium vorzusehen, welches aus dem Redoxpaar eines ersten Metalls bzw. Metalloxids gebildet ist. Es ist dann ein zusätzliches, fluidisches Redoxpaar vorgesehen, das die Sauerstoffionen zwischen der zweiten Elektrode einerseits und dem Speichermedium andererseits transportiert.Die Batterie wird dabei bei relativ hohen Temperaturen von bis zu 900°C betrieben.

Das bisherige Design der Speicherelemente geht von einer skelettartigen Struktur mit hoher offener Porosität aus. Zur Verminderung der Sinterneigung bei den in den Festelektrolyt-Batterien herrschenden Betriebstemperaturen werden sog. ODS-(Oxide Dispersion Strenghthened)verstärkte Metall- bzw. Metalloxidpartikel verwendet. Weiterhin werden die Metall-bzw. Metalloxidpartikel durch eine keramische Matrix voneinander separiert.

Während des Entladevorgangs, also im Zuge des Oxidationsprozesses, diffundieren Sauerstoffionen in die Metallpartikel des Speicherelements ein. Andererseits findet im Rahmen des Oxidationsprozesses auch eine Diffusion der Metallatome auf die Sauerstoffquelle der Batterie hin statt. Dies ist für die strukturelle Stabilität des Speichermediums nachteilig. Um eine möglichst vollständige Ausnutzung der Speicherkapazität bei gleichzeitig optimaler Lade- bzw. Entladekinetik sicherzustellen, ist es nämlich von besonderer Bedeutung, dass die Metallpartikel möglichst fein verteilt, d.h. mit großer aktiver Oberfläche, an welcher die Oxidations- bzw. Reduktionsprozesse stattfinden können, im Speicherelement vorliegen. Durch die Diffusionsneigung des Metalls in Richtung des Sauerstoffionengradienten kommt es jedoch mittelfristig zu einer Entmischung der Speicherstruktur und damit zu einer Zunahme der Interpartikelkontakte zwischen den Metall- bzw. Metalloxidkörnern. Letzteres führt aufgrund der hohen Betriebstemperatur zu einer Versinterung der Partikel und damit zu einer Abnahme der aktiven Oberfläche der enthaltenen Metallpartikel. Dies behindert den Lade- bzw. Entladeprozess und verschlechtert die jeweilige Kinetik. Zudem wird hierdurch die effektiv nutzbare Speicherkapazität des Speichers reduziert.

Der vorliegenden Erfindung liegt somit die Aufgabe zugrunde, ein Speicherelement nach dem Oberbegriff von Patentanspruch 1 bereitzustellen, welches besonders stabil gegenüber diffusionsbedingter Entmischung seiner Feinstruktur ist. Diese Aufgabe wird durch ein Speicherelement mit den Merkmalen des Patentanspruchs 1 gelöst.

Dementsprechend ist Gegenstand der vorliegenden Erfindung ein Speicherelement für eine Festelektrolyt-Batterie, mit einem Grundkörper aus einer porösen keramischen Matrix, in welche Partikel aus einem ersten Metall und/oder einem Metalloxid, welche zusammen ein Redoxpaar bilden, eingelagert sind, wobei das Speicherelement Partikel aus einem weiteren Metall und/oder einem zugeordneten Metalloxid umfasst, wobei das weitere Metall unter den Betriebsbedingungen des Speicherelements für eine Festelektrolyt-Batterie elektrochemisch edler ist als das erste Metall, wobei ein Volumenanteil der Partikel aus dem ersten Metall und/oder dem Metalloxid mehr als 50 Vol.% des Feststoffvolumens des Speicherelements beträgt, wobei der Speicherkörper alternierende Schichten aus keramischer Matrix mit eingelagerten Partikeln aus dem Metall und/oder Metalloxid und Schichten aus Partikeln des Weiteren Metalls und/oder einem zugeordneten Metalloxid umfasst.

Ein derartiges Speicherelement für eine Festelektrolytbatterie umfasst einen Grundkörper aus einer porösen keramischen Matrix, in welche Partikel aus einem ersten Metall und/oder einem zugehörigen Metalloxid eingelagert sind, welche zusammen ein Redoxpaar bilden.

Erfindungsgemäß ist dabei vorgesehen, dass das Speicherelement Partikel aus einem weiteren Metall und/oder einem zugehörigen Metalloxid umfasst, welches elektrochemisch edler ist als das erste Metall. Aufgrund der Position des weiteren Metalls in der Spannungsreihe wird dieses während des Oxidations-Reduktions-Zyklus des ersten Metalls nicht mitoxidiert und liegt daher beständig in metallischer Form vor bzw. wird beim ersten Reduktioszyklus aus dem Oxid des weiteren Metalls gebildet und liegt ab diesem Zeitpunkt beständig in metallischer Form vor. Wird das erste Metall im Zuge des Ladens der Festelektrolytbatterie durch Reduktion des Metalloxids bereitgestellt, so kann das erste Metall mit dem weiteren Metall eine Legierung bilden. Hierdurch wird ermöglicht, dass sich etwaig gebildete Konzentrationsgradienten des ersten Metalls durch Festkörperdiffusion ausgleichen. Hierdurch wird die Entmischung des Speicherelements deutlich behindert, so dass dieses die gewünschte Struktur länger beibehält. Damit wird eine langfristig stabile Speicherkapazität sowie eine langfristig stabile Lade- und Entladekinetik des Speicherelements gewährleistet.

Hierzu ist es besonders zweckmäßig, wenn das weitere Metall in der gebildeten Legierung aus dem ersten und dem weiteren Metall eine andere, insbesondere eine niedrigere Diffusionsgeschwindigkeit in Festkörpern besitzt als das erste Metall, so dass die Entmischung besonders zuverlässig vermieden wird.

Die Zusammensetzung des Speicherelements umfasst zweckmäßigerweise einen Volumenanteil der Partikel aus dem ersten Metall und/oder dem Metalloxid von mehr als 50 Vol.% des Feststoffvolumens des Speicherelements sowie einen Volumenanteil der Partikel aus dem weiteren Metall von weniger als 50 Vol.% des Feststoffvolumens des Speicherelements. Um eine besonders gute Eindiffusion der Sauerstoffionen zu ermöglichen, weist das Speicherelement vorzugsweise ein Porenvolumen von weniger als 50 Vol.% seines Gesamtvolumens auf.

Ein besonders einfaches und stabiles System kann geschaffen werden, wenn für das erste Metall Eisen verwendet wird. Die zugehörigen Oxide, die im entladenen Zustand der Batterie vorliegen, sind dann beispielsweise FeO, Fe₃O₄, Fe₂O₃.

Im Falle von Eisen-/Eisenoxid-basierten Speicherelementen ist es besonders zweckmäßig, als weiteres Metall Nickel zu verwenden. Selbstverständlich sind auch andere edlere Metalle, wie beispielsweise Kupfer, Silber, Gold, Platin oder Palladium möglich, wobei sich Nickel zunächst aus Kostengründen anbietet. Die Verwendung von Nickel ermöglicht auch den Aufbau eines besonders homogenen Systems, da beispielsweise auch Abgriffselektroden in Form von Nickelnetzen anodenseitig verwendet werden.

Als Matrixmaterial wird zweckmäßigerweise eine oxidische Keramik der Haupt- oder Nebengruppenmetalle verwendet. Besonders zweckmäßig ist die Verwendung von Aluminiumoxid, Magnesiumoxid oder Titanoxid. Auch Mischoxide von Yttrium, Scandium und Zirkon oder von Gadolinium und Cer können Verwendung finden, ebenso komplexe Mischoxide mit einem ersten Metallanteil aus der Gruppe Lanthan, Strontium, Calcium, Barium, Cer und einem zweiten metallischen Anteil aus der Gruppe Eisen, Titan, Chrom, Gadolinium, Cobalt oder Mangan. Von besonderer Bedeutung ist dabei, dass die verwendeten Oxide sowohl im Betriebstemperaturbereich der Festelektrolytbatterie - also bis zu 900°C - thermisch beständig sind sowie unter den elektrochemischen Bedingungen im Speicherelement nicht zur Reduktion neigen.

Für die Strukturierung des Speicherelements bestehen ebenfalls mehrere Möglichkeiten. Zum einen ist es möglich, die Partikel aus dem ersten Metall und/oder dem Metalloxid sowie die Partikel aus dem weiteren Metall und/oder Metalloxid homogen in der Matrix verteilt vorzulegen. Dies ist fertigungstechnisch eine besonders einfache Variante, da derartige Speicherelemente auf einfachste Weise durch Pressen, Extrusion, Tape-Casting oder dergleichen der entsprechend vorbereiteten und gemischten Schlicker hergestellt werden können.

Auch komplexere Strukturen sind möglich, so ist es beispielsweise denkbar, den Speicherkörper durch alternierende Schichten aus keramischer Matrix mit eingelagerten Partikeln aus dem Metall und/oder Metalloxid und Schichten aus Partikeln des weiteren Metalls aufzubauen. Die rein metallischen Zwischenschichten bilden dabei besonders effiziente Diffusionsbarrieren für das Metall in einer Vorzugsrichtung.

Auch eine zusammenhängende Skelettstruktur, die aus dem weiteren Metall innerhalb der Matrix gebildet wird, ist möglich. Auch hier entstehen effiziente Diffusionsbarrieren, die jedoch im Gegensatz zu einem schichtstrukturierten Aufbau keine Vorzugsrichtung aufweisen.

Im Folgenden werden die Erfindung und ihre Ausführungsformen anhand der Zeichnung näher erläutert. Es zeigen:
- FIG 1: eine schematische Schnittdarstellung durch ein Ausführungsbeispiel eines nicht erfindungsgemäßen Speicherelements mit homogener und isotroper Partikelverteilung;
- FIG 2: eine schematische Schnittdarstellung durch ein Ausführungsbeispiel eines erfindungsgemäßen Speicherelements mit Schichtstruktur; und
- FIG 3: eine schematische Schnittdarstellung durch ein weiteres Ausführungsbeispiel eines nicht erfindungsgemäßen Speicherelements mit einer skelettartigen Mikrostruktur.

Ein im Ganzen mit 10 bezeichnetes Speicherelement für eine Festelektrolytbatterie umfasst eine keramische Matrix 12, in welche eine erste Klasse von Partikeln 14 aus einem Metall bzw. einem zugeordneten Metalloxid, sowie eine zweite Klasse von Partikeln 16 aus einem weiteren Metall und/oder einem zugehörigen Metalloxid eingelagert sind.

Im Ladebetrieb einer Festelektrolytbatterie mit einem derartigen Speicherelement 10 wird eine dem Speicherelement 10 zugeordnete Festelektrolyt-Brennstoffzelle im Elektrolysemodus betrieben, wobei durch das entstehende Reduktionsmittel die Metalloxidpartikel 14 zum entsprechenden Metall reduziert werden. Im Entladebetrieb werden die Metallpartikel 14 durch Sauerstoffionen wieder zum entsprechenden Oxid oxidiert, wobei die frei werdende Energie elektrisch entnommen werden kann.

Um eine große Speicherkapazität sowie eine gute Lade- bzw. Entladekinetik sicherzustellen, müssen die Partikel 14 aus dem Metall bzw. Metalloxid eine große aktive Oberfläche besitzen. Während des Oxidationsprozesses neigen die Metallatome der Partikel 14 jedoch dazu, in Richtung des ansteigenden Sauerstoffionengradienten zu diffundieren. Dies führt zu einer Entmischung der Mikrostruktur des Speicherelements 10, wodurch die aktive Oberfläche der Partikel 14 reduziert und damit die Speicherkapazität bzw. Lade- und Entladekinetik entsprechend beeinträchtigt wird.

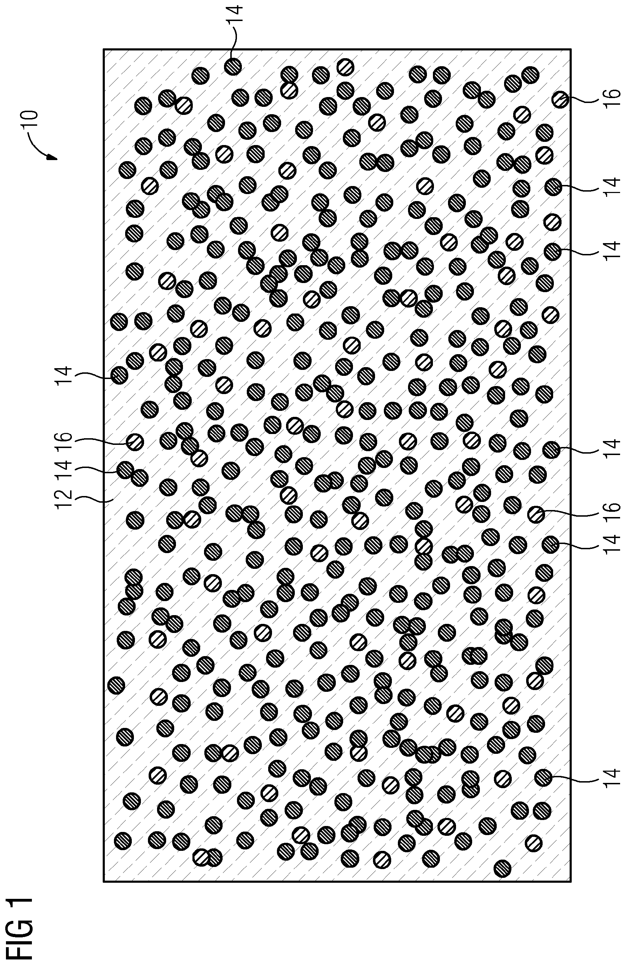

Um dies zu vermeiden, werden zusätzlich Partikel 16 aus einem anderen Metall und/oder einem zugeordneten Metalloxid in die keramische Matrix 12 eingelagert. Dies kann, wie in FIG 1 gezeigt, in Form einer homogenen und isotropen Verteilung erfolgen. Bei der Reduktion der Metalloxide der Partikel 14 zum entsprechenden Metall können diese Metallatome mit dem Metall der Partikel 16 legieren. Es ist dabei von Bedeutung, dass in der entstehenden Legierung die Atome des Metallpartikels 16 eine geringere Diffusionsgeschwindigkeit besitzen als die Atome der Metallpartikel 14. Ferner ist zu beachten, dass das Metall der Partikel 16 chemisch edler sein muss als das Metall der Partikel 14, sodass während des Oxidations-Reduktionszyklus die Partikel 16 keine Reaktion eingehen.

Für die praktische Anwendung empfiehlt sich daher die Verwendung von Eisen bzw. Eisenoxiden für die Partikel 14 sowie von Nickel für die Partikel 16. Die keramische Matrix 12 kann eine beliebige oxidische Keramik der Haupt- oder Nebengruppenelemente sein, sofern die entsprechende Keramik unter den elektrochemischen Betriebsbedingungen redoxinert sowie thermisch stabil genug ist, um Betriebstemperaturen von etwa 900°C zu ertragen. Im einfachsten Fall kann dabei Aluminiumoxid, Magnsiumoxid, Zirkonoxid oder dergleichen verwendet werden, es ist jedoch auch die Verwendung von komplexeren Mischoxiden, beispielsweise Yttrium-, Scandium-, Zirkon-Mischoxiden, Gadolinium-, Cer-Mischoxiden, komplexen Mischoxiden mit einem ersten metallischen Anteil aus der Gruppe Lanthan, Strontium, Calcium, Barium, Cer und einem zweiten metallischen Anteil aus der Gruppe Eisen, Titan, Chrom, Gadolinium, Cobalt, Mangan möglich.

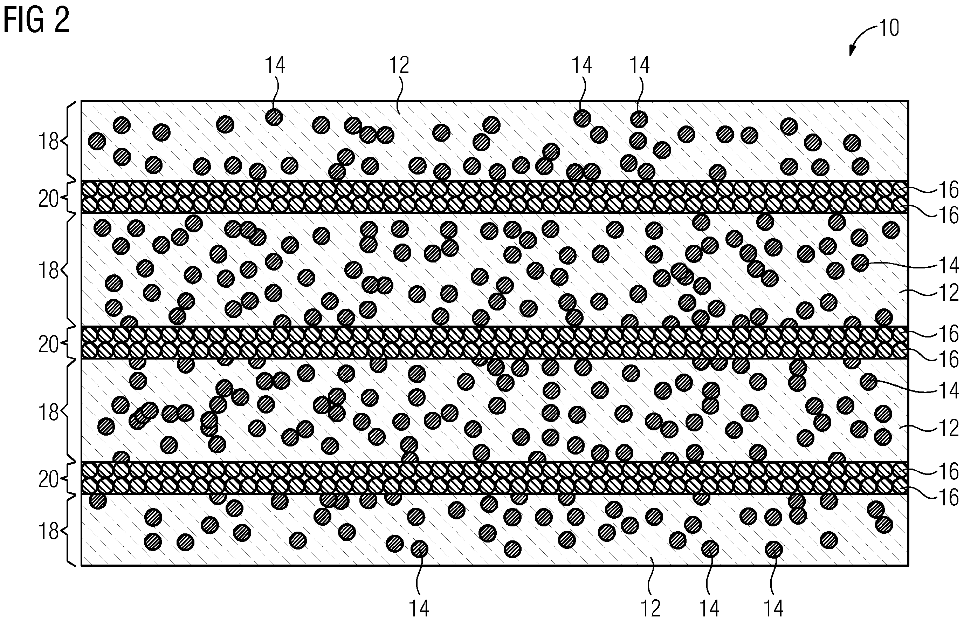

Alternativ zur homogenen und isotropen Verteilung der Partikel 14, 16 in der Matrix 12 sind auch komplexere Strukturen möglich. FIG 2 zeigt eine erfindungsgemäße Ausführungsform des Speicherelements 10, bei welcher das Speicherelement 10 aus alternierenden Schichten 18, 20 aufgebaut ist. Die Schichten 18 sind dabei aus keramischer Matrix 12 gebildet, in welche lediglich Partikel 14 aus dem Metall bzw. Metalloxid, welches am Redoxprozess teilnimmt, eingelagert sind. Die Schichten 20 bestehen dagegen ausschließlich aus Partikeln 16 des Legierungsbildners. Die Schichten 20 bilden dabei eine Diffusionsbarriere für die Atome der Partikel 14, sodass auch hier der Diffusion entgegengewirkt wird, bzw. eine Rehomogenisierung während des Ladebetriebs ermöglicht wird. Die Rehomogenisierung kann in allen Fällen durch die gewählten Ladebedingungen, insbesondere durch die Wahl von Temperatur, Zeit und Stromstärke, gezielt gesteuert werden.

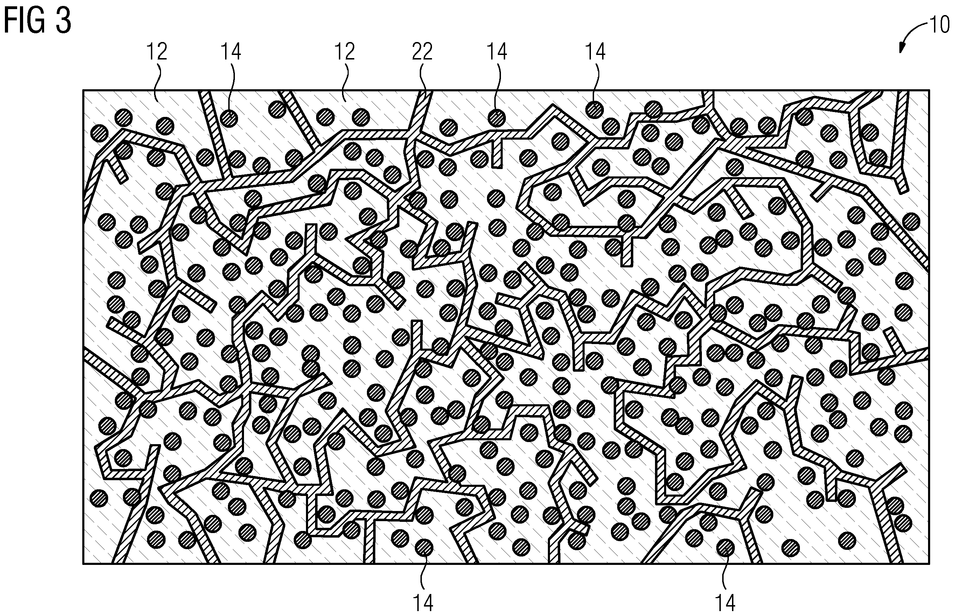

FIG 3 zeigt schließlich eine weitere Ausführungsform eines nicht erfindungsgemäßen Speicherelements 10, bei welchem in der keramischen Matrix 12 die Partikel 14 aus dem am Redoxprozess teilnehmenden Metall-Metalloxid-System homogen verteilt sind. Innerhalb der Matrix 12 ist ferner eine Skelettstruktur 22 aus Partikeln 16 des Legierungsbildners vorgesehen. Auch hier wird eine effiziente Diffusionsbarriere respektive eine Unterstützungsstruktur für die Rehomogenisierung gebildet, die jedoch im Gegensatz zu einer Schichtstruktur gemäß FIG 2 keine Vorzugsrichtung aufweist.

Die Herstellung derartiger Strukturen ist je nach der Mikrostruktur des Speicherelements 10 mit einer Vielzahl von keramischen Herstellungsmethoden, wie beispielsweise dem Pressen, Extrudieren, Foliengießen und anschließendem Stapeln der Folien und dergleichen möglich, sodass eine prozesssichere und großserienfähige Fertigung gewährleistet ist.

## Patentansprüche

1. Speicherelement (10) für eine Festelektrolyt-Batterie, mit einem Grundkörper aus einer porösen keramischen Matrix (12), in welche Partikel (14) aus einem ersten Metall und/oder einem Metalloxid, welche zusammen ein Redoxpaar bilden, eingelagert sind, wobei das Speicherelement (10) Partikel (16) aus einem weiteren Metall und/oder einem zugeordneten Metalloxid umfasst, wobei das weitere Metall unter den Betriebsbedingungen des Speicherelements für eine Festelektrolyt-Batterie elektrochemisch edler ist als das erste Metall, wobei ein Volumenanteil der Partikel (14) aus dem ersten Metall und/oder dem Metalloxid mehr als 50 Vol.% des Feststoffvolumens des Speicherelements (10) beträgt,
**dadurch gekennzeichnet, dass** der Speicherkörper alternierende Schichten (18) aus keramischer Matrix (12) mit eingelagerten Partikeln (14) aus dem Metall und/oder Metalloxid und Schichten (20) aus Partikeln (16) des weiteren Metalls und/oder einem zugeordneten Metalloxid umfasst.

2. Speicherelement (10) nach Anspruch 1, **dadurch gekennzeichnet, dass** das weitere Metall in einer Legierung aus dem ersten und dem weiteren Metall eine andere Diffusionsgeschwindigkeit besitzt, als das erste Metall.

3. Speicherelement (10) nach einem der Ansprüche 1 oder 2, **dadurch gekennzeichnet, dass** ein Volumenanteil der Partikel (16) aus dem weiteren Metall weniger als 50 Vol.% des Feststoffvolumens des Speicherelements (10) beträgt.

4. Speicherelement (10) nach einem der Ansprüche 1 bis 3, **dadurch gekennzeichnet, dass** das Speicherelement (10) ein Porenvolumen von weniger als 50 Vol.% seines Gesamtvolumens aufweist.

5. Speicherelement (10) nach einem der Ansprüche 1 bis 4, **dadurch gekennzeichnet, dass** das erste Metall Fe ist.

6. Speicherelement (10) nach einem der Ansprüche 1 bis 5, **dadurch gekennzeichnet, dass** das weitere Metall Ni ist.

7. Speicherelement (10) nach einem der Ansprüche 1 bis 6, **dadurch gekennzeichnet, dass** die keramische Matrix (12) eine oxidische Keramik, insbesondere aus der Gruppe (Y,Sc,Zr)O₂, (Gd,Ce)O₂, AlₛO₃, MgO, TiO₂, (La,Sr,Ca,Ba,Ce)(Fe,Ti,Cr,Ga,Co,Mn)O₃, ist.

## Claims

1. Storage element (10) for a solid electrolyte battery, which comprises a main element composed of a porous ceramic matrix (12) in which particles (14) of a first metal and/or a metal oxide, which together form a redox pair, are embedded, wherein the storage element (10) comprises particles (16) of a further metal and/or an associated metal oxide, wherein the further metal, under the operating conditions of the storage element for a solid electrolyte battery, is more electrochemically noble than the first metal wherein the proportion by volume of the particles (14) of the first metal and/or the metal oxide is more than 50% by volume of the solids volume of the storage element (10), **characterized in that** the storage element comprises alternating layers (18) of ceramic matrix (12) with embedded particles (14) of the metal and/or metal oxide and layers (20) of particles (16) of the further metal and/or an associated metal oxide.

2. Storage element (10)according to Claim 1,
**characterized in that** the further metal has a different diffusion velocity than the first metal in an alloy of the first metal and the further metal.

3. Storage element (10) according to either of Claims 1 and 2, **characterized in that** the proportion by volume of the particles (16) of the further metal is less than 50% by volume of the solids volume of the storage element (10).

4. Storage element (10) according to any of Claims 1 to 3, **characterized in that** the storage element (10) has a pore volume of less than 50% by volume of its total volume.

5. Storage element (10) according to any of Claims 1 to 4, **characterized in that** the first metal is Fe.

6. Storage element (10) according to any of Claims 1 to 5, **characterized in that** the further metal is Ni.

7. Storage element (10) according to any of Claims 1 to 6, **characterized in that** the ceramic matrix (12) is an oxidic ceramic, in particular from the group consisting of (Y,Sc,Zr)O₂, (Gd,Ce)O₂, AlₛO₃, MgO, TiO₂, (La,Sr,Ca,Ba,Ce)(Fe,Ti,Cr,Ga,Co,Mn)O₃.

## Revendications

1. Élément (10) faisant office d'accumulateur pour une batterie à électrolyte solide, comprenant un corps de base réalisé à partir d'une matrice céramique poreuse (12) dans laquelle sont incorporées des particules (14) constituées par un premier métal et/ou par un oxyde métallique, qui forment ensemble une paire redox ; dans lequel l'élément (10) faisant office d'accumulateur comprend des particules (16) constituées par un autre métal et/ou par un oxyde métallique correspondant ; dans lequel l'autre métal, dans les conditions d'exploitation de l'élément faisant office d'accumulateur pour une batterie à électrolyte solide, est plus noble, du point de vue électrochimique, que le premier métal ; dans lequel une fraction volumique des particules (14) constituées par le premier métal et/ou par l'oxyde métallique représente plus de 50 % en volume du volume de substance solide de l'élément (10) faisant office d'accumulateur ; **caractérisé en ce que** le corps de l'accumulateur comprend en alternance des couches (18) qui se composent d'une matrice céramique (12) dans laquelle sont incorporées des particules (14) constituées par le métal et/ou par l'oxyde métallique et des couches (20) qui se composent de particules (16) de l'autre métal et/ou d'un oxyde métallique correspondant.

2. Élément (10) faisant office d'accumulateur selon la revendication 1, **caractérisé en ce que** l'autre métal, dans un alliage constitué par le premier métal et par l'autre métal, possède une vitesse de diffusion différente de celle du premier métal.

3. Élément (10) faisant office d'accumulateur selon l'une quelconque des revendications 1 ou 2, **caractérisé en ce qu'**une fraction volumique des particules (16) constituées par le premier métal représente moins de 50 % en volume du volume de substance solide de l'élément (10) faisant office d'accumulateur.

4. Élément (10) faisant office d'accumulateur selon l'une quelconque des revendications 1 à 3, **caractérisé en ce que** l'élément (10) faisant office d'accumulateur présente un volume des pores inférieur à 50 % en volume de son volume total.

5. Élément (10) faisant office d'accumulateur selon l'une quelconque des revendications 1 à 4, **caractérisé en ce que** le premier métal est Fe.

6. Élément (10) faisant office d'accumulateur selon l'une quelconque des revendications 1 à 5, **caractérisé en ce que** l'autre métal est Ni.

7. Élément (10) faisant office d'accumulateur selon l'une quelconque des revendications 1 à 6, **caractérisé en ce que** la matrice céramique (12) représente une céramique oxydée, en particulier choisie parmi le groupe (Y, Sc, Zr)O₂, (Gd, Ce)O₂, AlₛO₃, MgO, TiO₂, (La, Sr, Ca, Ba, Ce) (Fe, Ti, Cr, Ga, Co, Mn)O₃.
